# EUROPEAN PATENT SPECIFICATION

(11) **EP 2 622 125 B1**
(45) Date of publication and mention of the grant of the patent: **10.12.2014**
(21) Application number: 11773345.1
(22) Date of filing: 03.10.2011
(51) Int. Cl.: D06N 7/00, C09J 167/02

(54) **LIGHTWEIGHT CARPET PRODUCTS AND METHOD OF MANUFACTURE THEREOF**
LEICHTE TEPPICHPRODUKTE UND VERFAHREN ZU IHRER HERSTELLUNG
TAPIS LÉGERS ET LEUR PROCÉDÉ DE FABRICATION

(30) Priority: 01.10.2010 US 389099 P
(43) Date of publication of application: 07.08.2013
(73) Proprietor: Beaulieu Group, LLC, Dalton, GA 30722-1248 (US)
(72) Inventor: SALSMAN, Robert, Keith, Hoschton GA 30548 (US)
(74) Representative: Patentanwaltskanzlei Matschnig & Forsthuber OG
(86) International application number: PCT/US2011/054569
(87) International publication number: WO 2012/045068

(56) References cited:
- EP-A1- 0 599 101
- EP-A2- 0 596 457
- WO-A1-95/21213
- WO-A2-2006/041753
- WO-A2-2006/135809

## Description

### CROSS-REFERENCE TO RELATED APPLICATIONS

This application claims the benefit of U.S. Provisional Application No. 61/389,099, filed October 1, 2010.

### BACKGROUND

The present disclosure relates generally to carpets and carpet tiles, and more particularly to lightweight carpet tiles and manufacturing methods.

U.S. Patent No. 8,021,506 to Doney et al. describes using hot melt adhesive lamination for forming a carpet backing and a finished carpet or carpet tile. The hot melt adhesive may comprise a modified PET polymer, such as described in U.S. Patent Application Publication No. 2008/0236443 to Salsman, and a glass filler, such as described in U.S. Patent Application Publication No. 2006/0281851 to Salsman.

It is desirable in some instances to provide carpet products such as carpet tiles that have a relatively low basis weight. However, achieving this can prove difficult. For example, if the manufacturer attempts to reduce the amount of hot melt adhesive, then the finished carpet product may not hold together well and may lack durability or dimensional stability. Alternatively or in addition, the manufacturer may attempt to alter the composition of the hot melt adhesive; however, this may negatively affect the adhesive properties of the adhesive (e.g., it may not penetrate into the greige carpet), may not work with existing process equipment, and/or may undesirably increase the production costs.

It therefore would be desirable to provide improved hot melt adhesive compositions and manufacturing methods to produce relatively light weight carpet products that overcome one or more of the deficiencies associated with conventional materials and processes.

### SUMMARY

In one aspect, a lightweight carpet product is provided. The carpet product includes a greige carpet having a primary backing and tufted fibers, a secondary backing including a nonwoven textile of synthetic fibers, and a thermoplastic adhesive composition adhered to the greige carpet and the secondary backing. The thermoplastic adhesive composition includes a modified polyethylene terephthalate (PET) having a crystallinity less than unmodified PET and a melting point from 90 °C to 150 °C and a particulate filler. In certain embodiments, the carpet product has a basis weight from 1695 grams per square meter (50 ounces per square yard) to 2034 grams per square meter (60 ounces per square yard).

In another aspect, a method of making a lightweight carpet product is provided, The method includes: (i) providing a thermoplastic adhesive composition including modified PET having a crystallinity less than unmodified PET and a melting point from 90 °C to 150 °C, and a particulate filler; (ii) providing a greige carpet which having a primary backing and tufted fibers; (iii) providing a secondary backing including a nonwoven textile of synthetic fibers; and (iv) using the thermoplastic adhesive composition to adhere the greige carpet to the secondary backing to form a carpet product. In certain embodiments, the thermoplastic adhesive composition is dispersed onto a surface of the secondary backing to form an adhesive-loaded secondary backing and then the greige carpet is brought into contact with the adhesive-loaded secondary backing to adhere the greige carpet to the secondary backing. In certain embodiments, the method further includes applying a nip pressure to the carpet product with a press roll.

In another aspect, a method of making a thermoplastic adhesive composition is provided. The method includes transesterifying raw PET with a monomer mix to produce modified PET and non-modified PET reaction products, and removing at least a portion of the non-modified PET reaction products to produce a modified PET composition having a crystallinity less than unmodified PET and a melting point from 90 °C to 150 °C.

### BRIEF DESCRIPTION OF THE DRAWINGS

**FIG. 1** is a cross-sectional view of a lightweight carpet product, in accordance with one or more embodiments described herein.
**FIG. 2** is a process diagram showing a method for manufacturing a lightweight carpet product, in accordance with one or more embodiments described herein.

### DETAILED DESCRIPTION

Improved lightweight carpet products, such as carpet tiles, have been developed, along with methods of manufacturing lightweight carpet products. The problem of providing an adhesive composition that will work in relatively reduced amounts and yet still impart sufficient durability and dimensional stability to a lightweight carpet product has been solved by providing a modified PET composition that has a crystallinity less than unmodified PET and a melting point from 90 °C to 150 °C with a relatively reduced amount of filler that has a high enough specific heat so that the low viscosity adhesive composition does not cool too quickly following application to the secondary backing and/or greige carpet. In addition, the present compositions and processes overcome the difficulties with dimensional instability that otherwise occur when trying to heat the primary backing to achieve an effective penetration of the adhesive composition.

These products and methods will be described more fully hereinafter with reference to the accompanying figures, in which like numerals refer to like elements.

### CARPET PRODUCTS

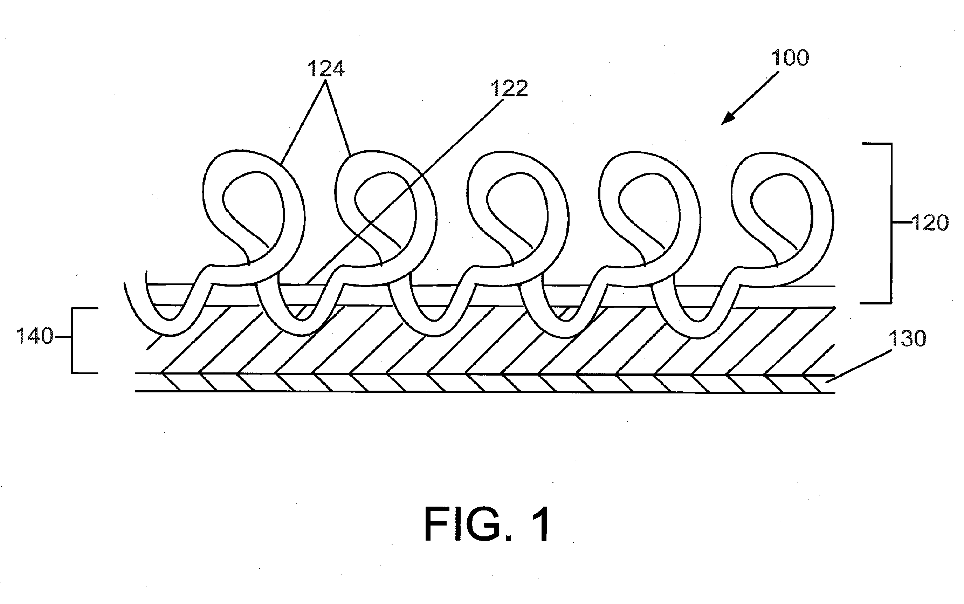

In one aspect, lightweight carpet products are provided. As shown in **FIG. 1****,** a lightweight carpet product **100** includes a greige carpet **120,** a secondary backing **130,** and a thermoplastic adhesive composition **140** adhered to the greige carpet **120** and the secondary backing **130.**

In certain embodiments, the greige carpet **120** includes a primary backing **122** and tufted fibers **124.** For example, the tufted fibers **124** may be woven onto the primary backing **122** to form a greige carpet **120.** The primary backing may be composed of nonwoven or woven polyesters, polypropylene, nylon fabrics, combinations thereof, or other suitable materials known in the art. The tufted fibers may be composed of nylon, polyester, acrylic, rayon, cotton, combinations thereof, or other suitable materials known in the art.

In certain embodiments, the secondary backing **130** is composed of a nonwoven textile of synthetic fibers. In one embodiment, the synthetic fibers are polyester fibers. For example, the secondary backing may be composed of a spunlaid nonwoven textile of polyester fibers. Other suitable synthetic fibers may include polypropylene, nylon-coated polyester fibers, or combinations thereof. The secondary backing may include single layer or multi-layer materials.

In certain embodiments, the secondary backing includes a nonwoven polyester textile having a relatively low porosity such that the thermoplastic adhesive composition will not substantially penetrate the secondary backing during manufacture. Porosity of the secondary backing may be determined by measuring penetration of the thermoplastic adhesive composition, by measuring the flow penetration of another fluid such as air, or by measuring a light scattering effect of the material. One exemplary low porosity nonwoven polyester secondary backing material is LUTRADUR FSI 200 (commercially available from Freudenberg Nonwovens, Weinheim, Germany).

In certain embodiments, the secondary backing has a basis weight of less than 203 grams per square meter (6 ounces per square yard). For example, the secondary backing may have a basis weight from 85 grams per square meter (2.5 ounces per square yard) to 203 grams per square meter (6 ounces per square yard). In one embodiment, the secondary backing may have a basis weight from 102 to 186 grams per square meter (3 to 5.5 ounces per square yard).

Additionally, the secondary backing material may be resistant to dimensional distortion at relatively high temperatures. For example, the secondary backing material may exhibit dimensional thermal stability at temperatures up to 176.7 °C (350 °F). As used herein, dimensional thermal stability refers to the secondary backing material shrinking less than 5% in both the warp and weft directions at a given temperature.

The thermoplastic adhesive composition **140** penetrates the greige carpet and adheres to both the greige carpet and the secondary backing, imparting dimensional stability and durability to the final carpet product **100.** In certain embodiments, the thermoplastic adhesive composition is composed of a modified polyethylene terephthalate (PET) having a crystallinity less than unmodified PET and a melting point from 90 °C to 150 °C, and a particulate filler.

Generally, unmodified PET has a relatively high crystallinity that makes it unworkable as an adhesive in a carpet product. For example, the high crystallinity causes unmodified PET to become rigid quickly and thus does not allow to the PET to penetrate the greige carpet or adhere to the greige carpet and secondary backing. Additionally, unmodified PET does not provide the necessary flexibility for a carpet product. Therefore, a modified PET having a crystallinity less than unmodified PET is desirable.

In certain embodiments, the modified PET has a crystallinity that is a fraction of that of unmodified PET. For example, the modified PET may have a crystallinity that is at least 10% less than the crystallinity of the unmodified PET, at least 20% less, at least 30% less, or at least 50% less than the crystallinity of the unmodified PET. Crystallinity may be measured using techniques known in the art, such as differential scanning calorimetry (DSC). In one embodiment, the modified PET has a crystallinity that is between 40% and 70% of the crystallinity of unmodified PET.

In a preferred embodiments, the modified PET has a relatively low melting point. In certain embodiments, the modified PET has a melting point from 90 °C to 150 °C. In embodiments, the modified PET composition has a melting point from 100 °C to 135 °C, e.g., 105 °C to 125 °C. For example, the modified PET may have a melting point from 100 °C to 115 °C. In one embodiment, the modified PET has a relatively low melting point and a crystallinity that is between 40% and 80% of the crystallinity of unmodified PET.

The thermoplastic adhesive composition may also include a particulate filler. In certain embodiments, the particulate filler is composed of glass, ceramic, barite, calcium carbonate, magnetite, stone, or a combination thereof. In certain embodiments, the particulate filler has a particle size small than 250 µm (60 mesh). For example, the particulate filler may have a particle size from 177 µm (80 mesh) to 250 µm (60 mesh). In a preferred embodiments, the particulate filler comprises glass particles, such a crushed glass having a particle size from 177 µm (80 mesh) to 250 µm (60 mesh).

In a preferred embodiment, the particulate filler has a relatively high specific heat that enables the filler to retain sufficient heat during the manufacture of the carpet product and thereby keep the thermoplastic adhesive composition molten so that it may penetrate the greige carpet. In certain embodiments, this is accomplished with a particulate filler having a specific heat from 0.63 kJ/kg K (0.15 kcal/kg°C) to 1.05 kJ/Kg K (0.25 kcal/kg°C).

The thermoplastic adhesive composition may contain a relatively low amount of filler to decrease the weight of the composition and allow an increased amount of PET to penetrate the greige carpet. It was discovered that upon compressing a secondary backing loaded with a thermoplastic adhesive composition containing a low amount of filler and a greige carpet, a polymer-rich film penetrates into the greige carpet while a large amount of the filler remains in the adhesive layer between the greige carpet layer and the secondary backing. Therefore, a decreased amount of particulate filler may be used while maintaining the dimensional stability imparted by the filler.

In certain embodiments, the particulate filler is present in an amount less than 43 percent by weight of the thermoplastic adhesive composition. For example, the particulate filler may be present in an amount from 37 to 41 percent by weight of the thermoplastic adhesive composition.

The resulting thermoplastic adhesive composition may have a relatively low viscosity that allows the composition to more fully penetrate the greige carpet. In certain embodiments, the thermoplastic adhesive composition has a viscosity from 5,000 mPa s (5,000 centipoise) at 162.8 °C (325 °F) to 10,000 mPa s (10,000 centipoise) at 162.8°C (325 °F). For example, the thermoplastic adhesive composition may have a viscosity from 6,000 mPa s (6,000 centipoise) at 162.8 °C (325 °F) to 8,500 mPa s (8,500 centipoise) at 162.8 °C (325 °F).

The thermoplastic adhesive composition may also include one or more additives to impart additional beneficial qualities to the finished carpet. For example, dyes, fire retardants, fillers, weighters, oxidization stabilizers, antibacterial agents, antimicrobial agents, antifungal agents, UV stabilizers, or combinations thereof may optionally be added to the thermoplastic adhesive composition.

The resulting carpet product **100** maybe lightweight as compared to traditional carpet products. Specifically, the thermoplastic adhesive compositions described herein may display viscosity and crystallinity such that a lower amount of thermoplastic adhesive composition is sufficient to impart the desired dimensional stability and durability to the final carpet product.

In certain embodiments, a lightweight carpet product has a basis weight of less than 2034 grams per square meter (60 ounces per square yard). For example, a carpet product may have a basis weight from 1695 grams per square meter (50 ounces per square yard) to 2034 grams per square meter (60 ounces per square yard). In one embodiment, the basis weight of the carpet product is from 1763 to 1967 grams per square meter (52 to 58 ounces per square yard), such as 1865 grams per square meter (55 ounces per square yard).

The carpet products described herein may display the necessary dimensional stability without any structural reinforcement. For example, the carpet products may not require a fiberglass mat or scrim. Rather, the thermoplastic adhesive composition and secondary backing may provide sufficient dimensional stability to the carpet product.

In certain embodiments, the carpet product displays an MT4 value of less than 0.125 and a CT4 value of less than 0.1, as measured according to the AACHEN test, which is standardized as ISO 2551.

In certain embodiments, the lightweight carpet product is a carpet tile. In one embodiment, a carpet tile having a basis weight from 1695 grams per square meter (50 ounces per square yard) to 2034 grams per square meter (60 ounces per square yard) includes a greige carpet, a spunlaid nonwoven polyester secondary backing, and a thermoplastic adhesive composition including a modified PET having a crystallinity less than unmodified PET and a melting point from 90 °C to 150 °C and a glass particulate filler in an amount from 37 to 41 percent by weight of the thermoplastic adhesive composition, adhered to the greige carpet and the secondary backing.

### METHODS

In another aspect, methods of manufacturing lightweight carpet products, such as carpet tiles, are provided. The methods include providing a greige carpet having a primary backing and tufted fibers, providing a secondary backing composed of a nonwoven textile of synthetic fibers, providing a thermoplastic adhesive composition including a modified PET having a crystallinity less than unmodified PET and a melting point from 90 °C to 150 °C and a particulate filler, and using the thermoplastic adhesive composition to adhere the greige carpet to the secondary backing to form a carpet product.

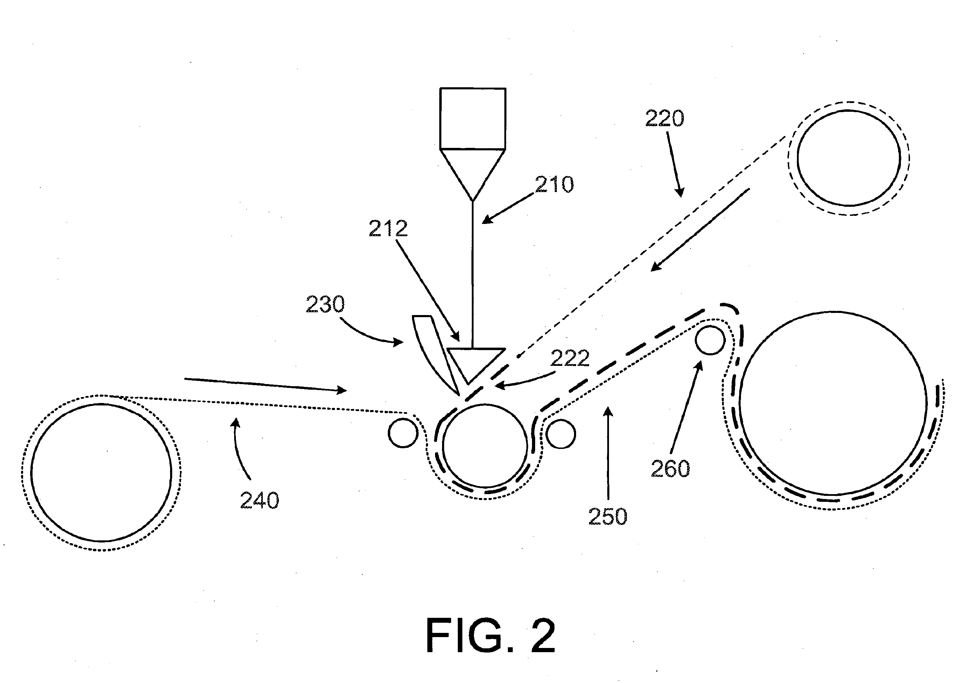

Methods of manufacturing lightweight carpet products may further include a process for using a thermoplastic adhesive composition to adhere greige carpet to secondary backing material, such as those described in U.S. Patent No. 8,021,506 to Doney et al. In certain embodiments, a thermoplastic adhesive composition is dispersed onto a surface of a secondary backing to form an adhesive-loaded secondary backing and then a greige carpet is brought into contact with the adhesive-loaded secondary backing to adhere the greige carpet to the secondary backing. As shown in **FIG. 2****,** for example, a thermoplastic adhesive composition **210** may be dispersed onto a surface of a secondary backing **220** to form an adhesive-loaded secondary backing **222,** the adhesive-loaded secondary backing **222** may then be passed under a heated doctor bar **230,** and a greige carpet **240** may then be contacted with the adhesive-loaded secondary backing **222** to form a carpet product **250.** In certain embodiments, the thermoplastic adhesive composition may form a pool **212** on the surface of the secondary backing **220.**

In certain embodiments, a nip pressure may be applied to the final carpet product with a press roll **260.** The press roll may be spaced away from the carpet product at a gap distance sufficient to apply a light pressure to the carpet product. Applying light pressure to the lightweight carpet product was found to enhance the penetration of the thermoplastic adhesive composition into the greige carpet without damaging the tufted fibers. In one embodiment, a gap between the carpet product and the press roll is from 185 mm to 285 mm.

In certain embodiments, the secondary backing includes a spunlaid nonwoven textile of polyester fibers. In certain embodiments, the secondary backing has a basis weight from 85 grams per square meter (2.5 ounces per square yard) to 203 grams per square meter (6 ounces per square yard) and has a porosity such that the thermoplastic adhesive composition will not substantially penetrate the secondary backing.

In certain embodiments, the particulate filler is present in an amount from 37 to 41 percent by weight of the thermoplastic adhesive composition.

In certain embodiments, the final carpet product has a basis weight of less than 2034 grams per square meter (60 ounces per square yard). For example, the carpet product may have a basis weight from 1695 grams per square meter (50 ounces per square yard) to 2034 grams per square meter (60 ounces per square yard). In certain embodiments, the carpet product is cut to form a plurality of carpet tiles.

In another aspect, a method of making a thermoplastic adhesive composition is provided. The method includes transesterifying raw PET with a monomer mix to produce modified PET and non-modified PET reaction products and removing at least a portion of the non-modified PET reaction products to produce a modified PET composition having a crystallinity less than unmodified PET and a melting point from 90 °C to 150 °C.

Transesterification of PET with a monomer mix may be performed in accordance with U.S. Patent No. 7,157,139 to Salsman et al. and/or U.S. Patent Application Publication No. 2008/0236443 to Salsman. In certain embodiments, transesterification may be performed at a temperature from 200 °C to 270 °C. In certain embodiments, the monomer mix comprises a glycol.

The removal of non-modified PET reaction products may be performed, for example, under vacuum. In certain embodiments, the portion of the non-modified PET reaction products removed is effective to give the modified PET composition a viscosity from 1.15 Pa s (11.5 poise) to 1.2 Pa s (12 poise). In operation, relatively low viscosities may be achieved by reducing the cycle time of the transesterification reaction, for example.

Modifications and variations of the methods and devices described herein will be obvious to those skilled in the art from the foregoing detailed description. Such modifications and variations are intended to come within the scope of the appended claims.

## Claims

1. A carpet product comprising:
a greige carpet which comprises a primary backing and tufted fibers;
a secondary backing which comprises a nonwoven textile of synthetic fibers; and
a thermoplastic hot melt adhesive composition adhered to the greige carpet
and the secondary backing, **characterized in that** the thermoplastic adhesive composition has a viscosity from 5,000 mPa s (5,000 centipoise) at 162.8 °C (325 °F) to 10,000 mPa s (10,000 centipoise) at 162.8 °C (325 °F) and comprises:
a modified polyethylene terephthalate (PET) having a crystallinity less than unmodified PET and a melting point from 90 °C to 150 °C; and
a particulate filler in an amount from 37 to 41 percent by weight of the thermoplastic hot meld adhesive composition,
wherein the carpet product has a basis weight of less than 2034.34 grams per square meter (60 ounces per square yard).

2. The carpet product of claim 1, wherein the thermoplastic hot melt adhesive composition has a viscosity from 6,000 mPa s (6,000 centipoise) at 162.8°C (325 °F) to 8,500 mPa s (8,500 centipoise) at 162.8°C (325 °F).

3. The carpet product of claim 1, wherein the modified PET has a melting point from 100 °C to 115 °C.

4. The carpet product of claim 1, wherein the particulate filler has a specific heat from 0.63 kJ/kg K (0.15 kcal/kg°C) to 1.05 kJ/kg K (0.25 kcal/kg°C).

5. The carpet product of claim 1, wherein the particulate filler comprises glass, ceramic, barite, calcium carbonate, magnetite, stone, or a combination thereof.

6. The carpet product of claim 1, wherein the particulate filler has a particle size smaller than 250 µm (60 mesh).

7. The carpet product of claim 1, wherein the secondary backing has a basis weight of less than 203 grams per square meter (6 ounces per square yard).

8. The carpet product of claim 1, wherein the secondary backing has a porosity such that the thermoplastic hot melt adhesive composition will not penetrate through the secondary backing.

9. The carpet product of claim 1, wherein the carpet product is a carpet tile.

10. A method of making a carpet product comprising:
providing a thermoplastic hot melt adhesive composition having a viscosity from 5,000 mPa s (5,000 centipoise) at 162.8°C (325 °F) to 10,000 mPa s (10,000 centipoise) at 162.8°C (325 °F) and which comprises modified PET having a crystallinity less than unmodified PET and a melting point from 90 °C to 150 °C and a particulate filler in an amount from 37 to 41 percent by weight of the thermoplastic hot meld adhesive composition;
providing a greige carpet which comprises a primary backing and tufted fibers;
providing a secondary backing which comprises a nonwoven textile of synthetic fibers; and
using the thermoplastic hot melt adhesive composition to adhere the greige carpet to the secondary backing to form a carpet product having a basis weight of less than 2034 grams per square meter (60 ounces per square yard).

11. The method of claim 10, further comprising applying a nip pressure to the carpet product with a press roll, wherein a gap between the carpet product and the press roll is from 185 mm to 285 mm.

12. The method of claim 10, wherein the greige carpet is adhered to the secondary backing by a process which comprises:
dispersing the thermoplastic hot melt adhesive composition on a surface of the secondary backing to form an adhesive-loaded secondary backing;
passing the adhesive-loaded secondary backing under a heated doctor bar; and then
contacting the greige carpet with the adhesive-loaded secondary backing to form the carpet product.

13. The method of claim 10, further comprising cutting the carpet product to form a plurality of carpet tiles.

14. The method of claim 10 or the carpet product of claim 1, wherein the secondary backing comprises a spunlaid nonwoven textile of polyester fibers.

15. The method of claim 10, wherein the secondary backing has a basis weight from 85 grams per square meter (2.5 ounces per square yard) to 203 grams per square meter (6 ounces per square yard) and has a porosity such that the thermoplastic hot melt adhesive composition will not penetrate the secondary backing.

16. The method of any one of claims 10 to 15 or the carpet product of any of claims 1 to 15, wherein the carpet product has a basis weight from 1695 grams per square meter (50 ounces per square yard) to 2034 grams per square meter (60 ounces per square yard).

17. A method of making a thermoplastic adhesive composition comprising:
transesterifying raw PET with a monomer mix at a temperature from 200 °C to 270 °C to produce modified PET and non-modified PET reaction products; and
removing at least a portion of the non-modified PET reaction products to produce a modified PET composition,
wherein the modified FET composition has a crystallinity less than unmodified PET and a melting point from 90 °C to 150 °C,
wherein the portion of the non-modified PET reaction products removed is effective to give the modified PET composition a viscosity from 1.15 Pa s (11.5 poise) to 1.2 Pa s (12 poise).

18. The method of claim 17, wherein the non-modified PET reaction products are removed under vacuum.

## Patentansprüche

1. Teppichprodukt umfassend:
einen Rohteppich, der einen primären Träger und getuftete Fasern umfasst;
einen sekundären Träger, der ein nichtgewebtes Textil aus synthetischen Fasern umfasst; und
eine thermoplastische Schmelzklebstoffzusammensetzung, die an dem Rohteppich und dem sekundären Träger haftet, **dadurch gekennzeichnet, dass** die thermoplastische Klebstoffzusammensetzung eine Viskosität von 5 000 mPa s (5 000 Centipoise) bei 162,8°C (325°F) bis 10 000 mPa s (10 000 Centipoise) bei 162,8°C (325 °F) aufweist und umfasst:
ein modifiziertes Polyethylenterephthalat (PET) mit einer geringeren Kristallinität als unmodifiziertes PET und einem Schmelzpunkt von 90 °C bis 150 °C; und
einen partikulären Füllstoff in einer Menge von 37 bis 41 Gewichts-% der thermoplastischen Schmelzklebstoffzusammensetzung,
wobei das Teppichprodukt ein Flächengewicht von weniger als 2034,34 Gramm pro Quadratmeter (60 Unzen pro Quadratyard) aufweist.

2. Teppichprodukt nach Anspruch 1, wobei die thermoplastische Schmelzklebstoffzusammensetzung eine Viskosität von 6 000 mPa s (6 000 Centipoise) bei 162,8 °C (325 °F) bis 8 500 mPa s (8 500 Centipoise) bei 162,8 °C (325 °F) aufweist.

3. Teppichprodukt nach Anspruch 1, wobei das modifizierte PET einen Schmelzpunkt von 100 °C bis 115 °C aufweist.

4. Teppichprodukt nach Anspruch 1, wobei der partikuläre Füllstoff eine spezifische Wärme von 0,63 kJ/kg K (0,15 kcal/kg°C) bis 1,05 kJ/kg K (0,25 kcal/kg°C).

5. Teppichprodukt nach Anspruch 1, wobei der partikuläre Füllstoff Glas, Keramik, Baryt, Calciumcarbonat, Magnetit, Stein oder eine Kombination davon umfasst.

6. Teppichprodukt nach Anspruch 1, wobei der partikuläre Füllstoff eine Partikelgröße kleiner als 250 µm (60 Mesh) aufweist.

7. Teppichprodukt nach Anspruch 1, wobei der sekundäre Träger ein Flächengewicht von weniger als 203 Gramm pro Quadratmeter (6 Unzen pro Quadratyard) aufweist.

8. Teppichprodukt nach Anspruch 1, wobei der sekundäre Träger eine Porosität hat, so dass die thermoplastische Schmelzklebstoffzusammensetzung nicht durch den sekundären Träger hindurchtritt.

9. Teppichprodukt nach Anspruch 1, wobei das Teppichprodukt eine Teppichfliese ist.

10. Verfahren zum Herstellen eines Teppichprodukts umfassend:
Bereitstellen einer thermoplastischen Schmelzklebstoffzusammensetzung, die eine Viskosität von 5 000 mPa s (5 000 Centipoise) bei 162,8°C (325 °F) bis 10 000 mPa s (10 000 Centipoise) bei 162,8°C (325 °F) aufweist und die ein modifiziertes PET mit einer geringeren Kristallinität als unmodifiziertes PET und einem Schmelzpunkt von 90 °C bis 150 °C und einen partikulären Füllstoff in einer Menge von 37 bis 41 Gewichts-% der thermoplastischen Schmelzklebstoffzusammensetzung umfasst;
Bereitstellen eines Rohteppichs, der einen primären Träger und getuftete Fasern umfasst;
Bereitstellen eines sekundären Trägers, der ein nichtgewebtes Textil aus synthetischen Fasern umfasst; und
Verwenden der thermoplastischen Schmelzklebstoffzusammensetzung zum Ankleben des Rohteppichs an den sekundären Träger zum Ausbilden eines Teppichprodukts, das ein Flächengewicht von weniger als 2034 Gramm pro Quadratmeter (60 Unzen pro Quadratyard) aufweist.

11. Verfahren nach Anspruch 10, welches ferner das Anwenden eines Walzenspaltdrucks am Teppichprodukt mit einer Presswalze umfasst, wobei der Spalt zwischen dem Teppichprodukt und der Presswalze 185 mm bis 285 mm beträgt.

12. Verfahren nach Anspruch 10, wobei der Rohteppich an den sekundären Träger mittels eines Verfahrens angeklebt wird, welches umfasst:
Verteilen der thermoplastischen Schmelzklebstoffzusammensetzung auf einer Oberfläche des sekundären Trägers zum Ausbilden eines mit Klebstoff beladenen sekundären Trägers;
Vorbeiführen des mit Klebstoff beladenen sekundären Trägers unter einer erwärmten Dosierrakel; und anschließendes
Inkontaktbringen des Rohteppichs mit dem mit Klebstoff beladenen sekundären Träger zum Ausbilden des Teppichprodukts.

13. Verfahren nach Anspruch 10, ferner umfassend das Schneiden des Teppichprodukts zum Herstellen einer Vielzahl von Teppichfliesen.

14. Verfahren nach Anspruch 10 oder das Teppichprodukt nach Anspruch 1, wobei der sekundäre Träger ein spinngelegtes nichtgewobenes Textil aus Polyesterfasern umfasst.

15. Verfahren nach Anspruch 10, wobei der sekundäre Träger ein Flächengewicht von 85 Gramm pro Quadratmeter (2,5 Unzen pro Quadratyard) bis 203 Gramm pro Quadratmeter (6 Unzen pro Quadratyard) aufweist und eine Porosität hat, so dass die thermoplastische Schmelzklebstoffzusammensetzung nicht durch den sekundären Träger hindurchtritt.

16. Verfahren nach einem der Ansprüche 10 bis 15 oder das Teppichprodukt nach einem der Ansprüche 1 bis 15, wobei das Teppichprodukt ein Flächengewicht von 1695 Gramm pro Quadratmeter (50 Unzen pro Quadratyard) bis 2034 Gramm pro Quadratmeter (60 Unzen pro Quadratyard) aufweist.

17. Verfahren zum Herstellen einer thermoplastischen Schmelzklebstoffzusammensetzung, umfassend:
Umestern von rohem PET mit einer Monomermischung bei einer Temperatur von 200 °C bis 270 °C zum Herstellen von modifiziertem PET und nicht-modifizierten PET-Reaktionsprodukten; und
Entfernen zumindest eines Anteils der nicht-modifizierten PET-Reaktionsprodukte zum Herstellen einer modifizierten PET-Zusammensetzung,
wobei die modifizierte PET-Zusammensetzung eine geringere Kristallinität als unmodifiziertes PET und einen Schmelzpunkt von 90 °C bis 150 °C aufweist,
wobei der Anteil an entfernten nicht-modifizierten PET-Reaktionsprodukten wirksam ist, der modifizierten PET-Zusammensetzung eine Viskosität von 1,15 Pa s (11,5 Poise) bis 1,2 Pa s (12 Poise) zu verleihen.

18. Verfahren nach Anspruch 17, wobei die nicht-modifizierten PET-Reaktionsprodukte unter Vakuum entfernt werden.

## Revendications

1. Produit en moquette, comprenant :
une moquette écrue qui comprend un support primaire et des fibres touffetées ;
un support secondaire qui comprend un textile non tissé de fibres synthétiques ; et
une composition adhésive thermofusible thermoplastique collée à la moquette écrue et au support secondaire, **caractérisé en ce que** la composition adhésive thermoplastique possède une viscosité de 5000 mPa (5000 centipoises) à 162,8 °C (325 °F) à 10000 mPa (10000 centipoises) à 162,8 °C (325 °F) et comprend :
un polyéthylène téréphtalate (PET) modifié possédant une cristallinité inférieure à celle de PET non modifié et un point de fusion de 90 °C à 150 °C ; et
une charge particulaire dans une quantité de 37 à 41 pourcent en poids de la composition adhésive thermofusible thermoplastique,
dans lequel le produit en moquette possède une masse surfacique inférieure à 2034,34 grammes par mètre carré (60 onces par yard carré).

2. Produit en moquette selon la revendication 1, dans lequel la composition adhésive thermofusible thermoplastique possède une viscosité de 6000 mPa (6000 centipoises) à 162,8 °C (325 °F) à 8500 mPa (8500 centipoises) à 162,8 °C (325 °F).

3. Produit en moquette selon la revendication 1, dans lequel le PET modifié possède un point de fusion de 100 °C à 115 °C.

4. Produit en moquette selon la revendication 1, dans lequel la charge particulaire possède une chaleur spécifique de 0,63 kJ/kg K (0,15 kcal/kg °C) à 1,05 kJ/kg K (0,25 kcal/kg °C).

5. Produit en moquette selon la revendication 1, dans lequel la charge particulaire comprend du verre, de la céramique, de la barytine, du carbonate de calcium, de la magnétite, de la pierre, ou une association de ceux-ci.

6. Produit en moquette selon la revendication 1, dans lequel la charge particulaire possède une dimension particulaire inférieure à 250 µm (60 mesh).

7. Produit en moquette selon la revendication 1, dans lequel le support secondaire possède une masse surfacique inférieure à 203 grammes par mètre carré (6 onces par yard carré).

8. Produit en moquette selon la revendication 1, dans lequel le support secondaire possède une porosité telle que la composition adhésive thermofusible thermoplastique ne pénétrera pas à travers le support secondaire.

9. Produit en moquette selon la revendication 1, dans lequel le produit en moquette est un carreau de moquette.

10. Procédé de fabrication d'un produit en moquette, comprenant :
la fourniture d'une composition adhésive thermofusible thermoplastique possédant une viscosité de 5000 mPa (5000 centipoises) à 162,8 °C (325 °F) à 10000 mPa (10000 centipoises) à 162,8 °C (325 °F) et qui comprend du PET modifié possédant une cristallinité inférieure à celle de PET non modifié et un point de fusion de 90 °C à 150 °C et une charge particulaire dans une quantité de 37 à 41 pourcent en poids de la composition adhésive thermofusible thermoplastique ;
la fourniture d'une moquette écrue qui comprend un support primaire et des fibres touffetées ;
la fourniture d'un support secondaire qui comprend un textile non tissé de fibres synthétiques ; et
l'utilisation de la composition adhésive thermofusible thermoplastique pour faire coller la moquette écrue au support secondaire pour former un produit en moquette possédant une masse surfacique inférieure à 2034 grammes par mètre carré (60 onces par yard carré).

11. Procédé selon la revendication 10, comprenant en outre l'application d'une pression au point de pinçage sur le produit en moquette avec un rouleau presseur, dans lequel un espace entre le produit en moquette et le rouleau presseur est de 185 mm à 285 mm.

12. Procédé selon la revendication 10, dans lequel la moquette écrue est collée au support secondaire par un procédé qui comprend :
la dispersion de la composition adhésive thermofusible thermoplastique sur une surface du support secondaire pour former un support secondaire chargé d'adhésif ;
le passage du support secondaire chargé d'adhésif sous une racle chauffée ; et puis
la mise en contact de la moquette écrue avec le support secondaire chargé d'adhésif pour former le produit en moquette.

13. Procédé selon la revendication 10, comprenant en outre la découpe du produit en moquette pour former une pluralité de carreaux de moquette.

14. Procédé selon la revendication 10 ou produit en moquette selon la revendication 1, dans lequel le support secondaire comprend un textile non tissé, déposé par filage, de fibres de polyester.

15. Procédé selon la revendication 10, dans lequel le support secondaire possède une masse surfacique de 85 grammes par mètre carré (2,5 onces par yard carré) à 203 grammes par mètre carré (6 onces par yard carré) et possède une porosité telle que la composition adhésive thermofusible thermoplastique ne pénétrera pas le support secondaire.

16. Procédé selon une quelconque des revendications 10 à 15 ou produit en moquette selon une quelconque des revendications 1 à 15, dans lequel le produit en moquette possède une masse surfacique de 1695 grammes par mètre carré (50 onces par yard carré) à 2034 grammes par mètre carré (60 onces par yard carré).

17. Procédé de fabrication d'une composition adhésive thermoplastique, comprenant :
la transestérification de PET brut avec un mélange monomère à une température de 200 °C à 270 °C pour produire des produits de réaction de PET modifié et de PET non modifié ; et
l'élimination d'au moins une portion des produits de réaction de PET non modifié pour produire une composition de PET modifié,
dans lequel la composition de PET modifié possède une cristallinité inférieure à celle du PET non modifié et un point de fusion de 90 °C à 150 °C,
dans lequel la portion des produits de réaction de PET non modifié éliminée est efficace pour donner à la composition de PET modifié une viscosité de 1,15 Pa (11,5 poises) à 1,2 Pa (12 poises).

18. Procédé selon la revendication 17, dans lequel les produits de réaction de PET non modifié sont éliminés sous vide.
